(19) Europäisches Patentamt
European Patent Office
Office européen des brevets

(11) Veröffentlichungsnummer: **0 618 263 A2**

# (12) EUROPÄISCHE PATENTANMELDUNG

(21) Anmeldenummer: **94104073.5**

(22) Anmeldetag: **16.03.94**

(51) Int. Cl.$^5$: **C08L 67/02**, C08L 75/04, C08L 51/00, C08K 5/00

(30) Priorität: **29.03.93 DE 4309981**
**29.04.93 DE 4314039**
**29.04.93 DE 4314040**
**29.04.93 DE 4314041**
**06.12.93 DE 4341459**

(43) Veröffentlichungstag der Anmeldung:
**05.10.94 Patentblatt 94/40**

(84) Benannte Vertragsstaaten:
**DE FR GB IT NL**

(71) Anmelder: **BAYER AG**

**D-51368 Leverkusen (DE)**

(72) Erfinder: **Magerstedt, Herbert, Dipl.-Ing.**
**Hölderlinstrasse 16**
**D-47445 Moers (DE)**
Erfinder: **Zander, Klaus, Dr.**
**Lierberg 38**
**D-45478 Mülheim (DE)**
Erfinder: **Friedemann, Paul, Dipl.-Ing.**
**Peter-Walterscheidt-Strasse 65**
**D-51469 Bergisch Gladbach (DE)**
Erfinder: **Leimann, Gerhard, Dipl.-Ing.**
**Hermelinstrasse 45**
**D-42657 Solingen (DE)**

## (54) Flammgeschützte thermoplastische Formmassen mit guter Temperaturbeständigkeit, Fliessverhalten und Zähigkeit.

(57) Die Erfindung betrifft flammgeschützte thermoplastische Formmassen auf der Basis von Polyalkylenterephthalat, thermoplastischem Polyurethan sowie aus diesen thermoplastischen Formmassen herstellbare und verwendbare schlagzähe, sehr leichtfließende, temperaturbeständige und flammgeschützte Formkörper, insbesondere für die Kabelummantelung bzw. für Formkörper, die ein entsprechendes Anforderungsprofil aufweisen.

EP 0 618 263 A2

Die Erfindung betrifft flammgeschützte thermoplastische Formmassen auf der Basis von Polyalkylenterephthalat, thermoplastischem Polyurethan sowie aus diesen thermoplastischen Formmassen herstellbare und verwendbare schlagzähe, sehr leichtfließende, temperaturbeständige und flammgeschützte Formkörper, insbesondere für die Kabelummantelung bzw. für Formkörper, die ein entsprechendes Anforderungsprofil aufweisen.

Es ist bekannt, daß Kunststoffe, wie beispielsweise Polyvinylchlorid, Polyamid, Polycarbonat, Polyalkylenterephthalat durch den Einsatz von halogenierten organischen Verbindungen flammgeschützt eingestellt werden können.

Weiterhin sind Mischungen aus Poly(ester)carbonaten, thermoplastischen Polyurethanen und Pfropfpolymeren bekannt (DE-OS 3 812 051).

Ferner sind Mischungen aus Polycarbonat und 0,25 bis 50 % eines Polyurethans sowie 0,01 bis 2,0 % eines Pfropfpolymeren (Alkenylcyanid und Vinylaromaten auf Polybutadien) gemäß DE-OS 2 304 214 bzw. US-Patent 3 813 358 bekannt. Die Abmischungen haben verbesserte Oberflächeneigenschaften.

US-PS 4 169 479 beschreibt thermoplastische Polyurethanelastomermischungen aus 40 bis 100 % eines thermoplastischen Polyurethans, 0 bis 60 % eines thermoplastischen Polymeren (Polycarbonat) und 0,5 bis 10 % eines Acrylpolymeren. Die Produkte zeichnen sich durch eine gute Homogenität der Mischung und die Formteile durch einen verbesserten Glanz aus. Als Acrylpolymere sind keine Pfropfpolymeren subsummiert.

Aus dem US-Patent 4 350 799 bzw. dem EP-A 0 074 594 sind Mischungen von thermoplastischen Polyurethanen, thermoplastischen Polyphosphonaten und thermoplastischen Polycarbonaten bekannt, welche eine verbesserte Flammwidrigkeit besitzen.

Aus der EP-OS 0 104 695 sind Mischungen aus einem oder mehreren Pfropfpolymerisaten, einem oder mehreren Copolymerisaten, einem oder mehreren Polycarbonaten und einem oder mehreren Polyurethanen, bekannt. Derartigen Mischungen werden eine gute Benzinbeständigkeit, gute Verarbeitungseigenschaften und ein gutes Fließverhalten zugeschrieben.

Als Polyurethane kommen elastische Polyurethane in Betracht (Seite 7, Absatz 4 von EP 0 104 695). Als Kautschukgrundlage für die Herstellung der Pfropfpolymerisate sind Polybutadien, Butadien-Styrol, Butadien-Acrylnitril oder Butadien-Acrylat-Kautschuke besonders erwähnt. (Seite 3, Zeilen 22/24 von EP 0 104 695). Die Pfropfmonomeren sind Mischungen von 20 bis 40 Gew.-% Acrylverbindungen mit 80 bis 60 Gew.-% Vinylaromaten und gegebenenfalls 0 bis 20 Gew.-% andere ungesättigte Verbindungen geeignet. Als Acrylverbindungen sind u.a. Alkylacrylate und Alkylmethacrylate oder deren Mischungen geeignet. (Seite 2, letzter Absatz von EP 0 104 695).

Aus der EP-A 0 125 739 sind Abmischungen von 50 bis 95 Gew.-Teilen an Polycarbonaten oder Polyestern, 2,5 bis 15 Gew.-Teilen an thermoplastischen Polyurethanen und 2,5 bis 35 Gew.-Teilen von Ethylen-Propylen-Dienkautschuken, die mit ethylenisch ungesättigten Verbindungen behandelt worden sind, welche Carboxyl-Gruppen enthalten oder bilden können. (Meth)acylsäureester sind in diesem Zusammenhang nicht erwähnt. Die Formmassen gemäß EP 0 125 739 haben jedoch noch erhebliche Nachteile (siehe Tabelle 2, Versuche 11 und 12).

Die DE-OS 3 521 407 beschreibt thermoplastische Formmassen mit verbesserter Fließnahtfestigkeit. Die Formmassen enthalten thermoplastische Polycarbonate, zwei verschiedene Pfropfpolymerisate und ein Copolymerisat und gegebenenfalls Additive wie Stabilisatoren, Pigmente, Fließmittel, Entformungsmittel, Flammschutzmittel und/oder Antistatika. Als Pfropfmonomere sind Methylmethacrylat erwähnt, als zu pfropfende Kautschuke eignet sich beispielsweise Polybutadien. Als Fließhilfsmittel wird ein bestimmtes thermoplastisches Polyurethan eingesetzt, und zwar in Mengen von 2 Gew.-Teilen pro 100 Gew.-Teilen der Formmasse aus Polycarbonat, Pfropfpolymerisaten und Copolymerisat.

Aus der DE-OS 3 521 408 sind Formmassen aus Polycarbonaten (A), Pfropfpolymerisaten (B) und gegebenenfalls Copolymerisaten (C) bekannt, die 0,5 bis 10 Gew.-Teile, bezogen auf 100 Gew.-Teile der Formmasse aus (A) + (B) und gegebenenfalls (C), eines speziellen Polyurethans enthalten; die resultierenden Produkte zeigen eine verbesserte Fließfähigkeit bei guter Thermostabilität.

Es wurde nun gefunden, daß Formmassen aus Polyalkylenterephthalat, thermoplastischem Polyurethan, Acrylatkautschuk und halogenierten organischen Verbindungen als Flammschutzmittel neben einem gutem brandwidrigen Verhalten und guter Temperaturbeständigkeit sowie Steifigkeit eine ausgezeichnete Fließfähigkeit und ein hohes zähelastisches Verhalten aufweisen.

Dabei ist besonders überraschend, daß sich hier eine nicht zu erwartende gute Verträglichkeit der Blendpartner Polyalkylenterephthalat mit thermoplastischem Polyurethan und Arcrylatkautschuk ohne weitere Zusätze wie Verträglichkeitsvermittler zeigt.

Die thermoplastischen Formmassen haben als Extrusionsmaterial eine besondere Bedeutung, z.B. als Isoliermantel mit Brandschutzausrüstung für die Kabelindustrie.

Ebenso können aus den Formmassen im Spritzgießverfahren hergestellte Formkörper relevant für Bauteile aus dem Elektrosektor sein.

Gegenstand der vorliegenden Erfindung sind thermoplastische Formmassen enthaltend

A) 12,5 bis 84,5, vorzugsweise 25 bis 76 Gew.-Teilen Polyalkylenterephthalat,

B) 5 bis 30, vorzugsweise 7,5 bis 25 Gew.-Teilen thermoplastischem Polyurethan,

C) 5 bis 30, vorzugsweise 7 bis 25 Gew.-Teilen Acrylatkautschuk,

D) 5 bis 20, vorzugsweise 7,5 bis 15 Gew.-Teile halogenhaltige organische Verbindung und

E) 0,5 bis 7,5, vorzugsweise 2 bis 6 Gew.-Teile Antimontrioxid oder Antimonpentoxid,

wobei die Summe aus A + B + C + D + E 100 ergibt.

Komponente A

Polyalkylenterephthalate im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80, vorzugsweise 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-$\beta$-hydroxyethoxyphenyl)-propan und 2,2-bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäure, wie sie z.B. in der DE-OS 1 900 270 und der US-PS 3 692 744 beschrieben sind, verzweigt werden. Beispiele für bevorzugtes Verzweigungsmittel sind Trimesinsäure, Trimellitsäure, Trimethylolethan und -propan und Pentaerythrit.

Es ist ratsam, nicht mehr als 1 Mol-% des Verzeigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. den Dialkylestern) und Ethylenglykol und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Schmelzviskosität von ca. 300 bis 1.000 Pas, vorzugsweise 400 bis 900 Pas, jeweils gemessen nach Göttfert.

Ein Teil der Polyalkylenterephthalat-Komponente kann durch aromatisches Polycarbonat und gegebenenfalls kautschukelastische Polymerisate mit einer Glasübergangstemperatur von ( -10 °C ersetzt werden.

Auch die erfindungsgemäße Zugabe von wiederaufgearbeiteten Bestandteilen der thermoplastischen Formmassen ist möglich, ohne daß die genannten Eigenschaften sich nachteilig verändern.

Komponente B

Thermoplastische Polyurethane gemäß Komponente B vorliegender Erfindung sind Reaktionsprodukte aus Diisocyanaten, mit ganz oder überwiegend aliphatischen Oligo- und/oder Polyestern und/oder -ethern sowie einem oder mehreren Kettenverlängerern. Diese thermoplastischen Polyurethane sind im wesentlichen linear und besitzen thermoplastische Verarbeitungscharakteristiken.

Die thermoplastischen Polyurethane sind entweder bekannt oder können nach bekannten Verfahren (siehe bespielsweise US-PS 3 214 411, J.H. Saunders und K.C. Frisch, "Polyurethanes, Chemistry and Technology", Vol. II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsäure, Oxalsäure, Methyladipinsäure, Glutarsäure, Pimelinsäure, Azelainsäure, Phthalsäure, Terephthalsäure und Isophthalsäure.

Adipinsäure ist hiebei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Dimethyl-propylenglykol in Betracht. Darüberhinaus können gemeinsam mit den Glykolen kleine Mengen bis zu 1 Mol-%, tri- oder höher funktionelle Alkohole, z.B. Trimethylolpropan, Glycerin, Hexantriol usw. eingesetzt werden.

Die resultierenden Hydroxyl-oligo- oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt von ca. 0,01 bis 0,2 %.

Oligoester bzw. Polyester sind auch oligomere oder polymere Lactone, wie beispielsweise Oligo-caprolacton oder Poly-captolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 % liegt.

Oligo- bzw. Polyether zur Herstellung der thermoplastischen Polyurethane gemäß Komponente B sind beispielsweise solche auf Basis von Tetramethylenglykol, Propylenglykol und Ethylenglykol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane gemäß Komponente B vorzugsweise 4,4'-Diphenylmethan-diisocyanat verwendet. Es sollte weniger als 5 % 2,4'-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane gemäß Komponente B verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens, des n-Phenylens, des Xylens, des 1,4-Naphthylens, des 1,5-Naphthylens, des 4,4'-Diphenylens, das 2,2-Diphenylpropan-4,4'-diisocyanat, das Azobenzol-4,4'-diisocyanat, des Diphenylsulfon-4,4'-diisocyanat, das Dichlorhexanmethylen-diisocyanat, das Pentamethylen-diisocyanat, das Hexamethylen-diisocyanat, das 1-Chlorbenzol-2,4-diisocyanat, das Furfuryl-diisocyanat, das Dicyclohexylmethan-diisocyanat, das Isophorondiisocyanat, das Diphenylethan-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-$\beta$-hydroxy-ethylether, 1,3-Phenylen-bis-$\beta$-hydroxyethylether, Bis-(hydroxymethyl-cyclohexan), Hexandiol, Adipinsäure, $\omega$-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3'-Dichlorbenzidin, 3,3'-Dinitrobenzidin, Ethanolamin, Aminopropylalkohol, 2,2-Diemthyl-propanolamin, 3-Aminocyclohexylalkohol und p-Aminobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane gemäß Komponente B eingesetzt werden.

Die als Bausteine für die thermoplastischen Polyurethane genannten Diisocyanate, Oligoester, Polyester Polyether. Kettenverlängerer und monofunktionellen Komponenten sind entweder literaturbekannt oder nach literaturbekannten Verfahren erhältlich.

Die bekannte Herstellung der Polyurethan-Komponente B kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220 °C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Komponente C

Bei der Komponente C handelt es sich vorzugsweise um ein Pfropfpolymerisat aus (i) 25 bis 95 Gew.-% einer ersten elastomeren Stufe, polymerisiert aus einem Monomersystem aus 90 bis 99,9 Gew.-% eines $C_1$ bis $C_6$-Alkylacrylats, 0,1 bis 5 Gew.-% eines vernetztenden Monomeren und gegebenenfalls 0,1 bis 5 Gew.-% eines pfropfvernetzenden Monomeren, wobei das vernetztende Monomere ein mehrfach ethylenisch ungesättigtes Monomeres mit einer Vielzahl von reaktionsfähigen zur Additionspolymerisation befähigten Gruppe ist, die alle im wesentlichen mit der gleichen Geschwindigkeit polymerisieren, und das pfropfvernetzende Monomere ein mehrfach ethylenisch ungesättigtes Monomeres mit einer Vielzahl von zur Additionspolymerisation befähigten Gruppen ist, wobei mindestens eine dieser Gruppen mit einer wesentlich anderen Polymerisationsgeschwindigkeit polymerisiert als mindestens eine andere reaktionsfähige Gruppe; und (ii) 75 bis 5 Gew.-% einer letzten harten thermoplastischen Stufe, die in Gegenwart der ersten elastomeren Stufe polymerisiert wurde.

Das bevorzugte Alkylacrylat ist Butylacrylat. Das vernetzende Monomere kann ein mehrfach ethylenisch ungesättigtes Monomeres sein mit einer Vielzahl von reaktionsfähigen Gruppen, die zur Additionspolymerisation befähigt sind und die alle im wesentlichen mit der gleichen Reaktionsgeschwindigkeit polymerisieren. Geeignete vernetzende Monomere sind beispielsweise mehrfache Ester der Acryl- und Methacrylsäure von Polyolen wie Butylendiacrylat und -dimethacrylat, Trimethylolpropantrimethacrylat und dergleichen; Di- und Trivinylbenzol, Vinylacrylat und -methacrylat und dergleichen. Das bevorzugte vernetzende Monomere ist Butylendiacrylat. Das pfropfvernetzende Monomere ist ein mehrfach ethylenisch ungesättigtes Monomeres mit einer Vielzahl von zur Additionspolymerisation befähigten reaktionsfähigen Gruppen, wobei mindestens eine dieser Gruppen mit einer im wesentlichen anderen Polymerisationsgeschwindigkeit reagiert als mindestens eine andere dieser reaktionsfähigen Gruppen. Die Funktion des pfropfvernetzenden Monomeren besteht darin, daß es einen Rest von Doppelbindungen in der elastomeren Stufe zur Verfügung stellt, insbesondere in den späteren Phasen der Polymerisation, so daß diese Doppelbindungen insbesondere an oder in der Nähe der Oberfläche der Elastomerteilchen vorhanden sind. Wenn die feste thermoplastische Stufe nachher an der Oberfläche des Elastomeren polymerisiert wird, tragen die restlichen ungesättigten, zur Additionspolymerisation befähigten und von dem pfropfvernetztenden Monomeren stammenden Gruppen zu der sich anschließenden Reaktion bei, so daß mindestens ein Teil der festen Stufe chemisch mit der Oberfläche des Elastomeren verbunden ist. Beispiele von geeigneten pfropfvernetzenden Monomeren sind Monomere mit Allylgruppen wie Allylester von ethylenisch ungesättigten Säuren, z.B. Allylacrylat, Allylmethacrylat, Diallylmaleat, Diallylfumarat, Diallylitaconat. Die bevorzugten pfropfvernetzenden Monomeren sind

Allylmethacrylat und Diallylmaleat.

Das Pfropfpolymerisat kann gegebenenfalls eine oder mehrere Zwischenstufen enthalten, z.B. eine Mittelstufe aus der Polymerisation von 75 bis 100 Gew.-% Styrol. Die erste Stufe kann als ein Kern eines Acrylkautschukes bezeichnet werden, der eine Glasumwandlungstemperatur (Tg) unterhalb etwa 10 °C besitzt. Dieser Kautschuk ist mit 0,1 bis 5 Gew.-% eines vernetzenden Monomeren vernetzt und enthält gegebenenfalls noch 0,1 bis 5 Gew.-% eines pfropfvernetzenden Monomeren.

Das am meisten bevorzugte Polymerisat hat nur zwei Stufen, wobei die erste Stufe 60 bis 95 Gew.-% des Polymeren ausmacht und aus einem Monomersystem polymerisiert ist aus 95 bis 99,8 Gew.-& Butylacrylat, 0,1 bis 2,5 Gew.-% Butylendiacrylat als Vernetzungsmittel und gegebenenfalls 0,1 bis 2,5 Gew.-% Allylmethacrylat oder Diallylmaleat als Vernetzungsmittel und eine letzte Stufe polymerisiert aus 60 bis 100 Gew.-% Methylmethacrylat.

Das Monomersystem der letzten Stufe kann $C_1$ bis $C_6$-Alkylmethacrylat, Styrol, Acrylonitril, Alkylacrylat, Allylmethacrylat und/oder Diallylmethacrylat enthalten, so lange die gesamt Tg mindestens 20 °C beträgt, d.h. so lange die letzte Stufe hart ist. Bevorzugt leitet sich die letzte Stufe aus einem Monomersystem ab, das 50 bis 100 Gew.-% $C_1$ bis $C_4$ Alkylmethacrylat ist.

Der Acrylatkautschuk gemäß Komponente C) wird nach üblichen Verfahren der Emulsionspolymerisation hergestellt. Er kann jedoch auch nach anderen bekannten Polymerisationsverfahren (beispielsweise Lösungs-, Masse-, Suspensionspolymerisation) hergestellt werden. Bevorzugt ist das Emulsionspolymerisationsverfahren.

Darüber hinaus können als Komponente C auch Mischungen von mehreren erfindungsgemäß einzusetzenden Pfropfpolymeren eingesetzt werden.

Komponente D

Als halogenhaltige, insbesondere bromierte, organische Verbindungen seien beispielhaft genannt:
Ethylen-1,2-bistetrabromphthalimid,
Epoxidiertes Tetrabrombisphenol A-Harz,
Tetrabrombisphenol-A-oligocarbonat,
Pentabrombenzylpolyacrylat.

Bevorzugt werden epoxidiertes Tetrabrombisphenol-A und Tetrabrombisphenol-A-oligocarbonat verwendet.

Epoxidiertes Tetrabrombisphenol-A ist ein bekanntes Diepoxidharz mit einem Molekulargewicht von etwa 350 bis etwa 2.100, vorzugsweise 360 bis 1.000, besonders bevorzugt 370 bis 400, und besteht im wesentlichen aus mindestens einem Kondensationsprodukt von Bisphenol A und Epihalogenhydrin und wird beschrieben durch die Formel (I)

Formel (I)

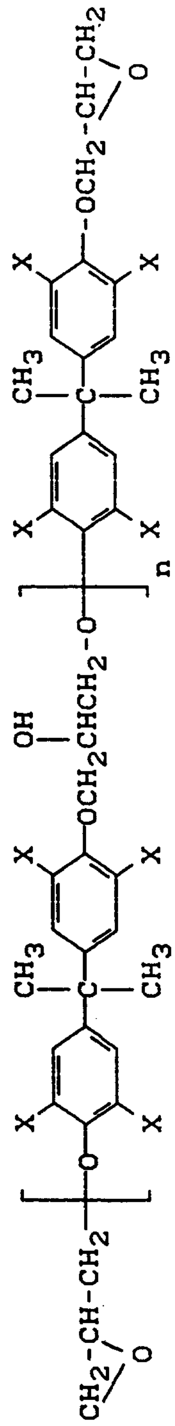

worin X Wasserstoff oder Brom darstellt und n eine Durchschnittszahl zwischen Null und weniger als 2,3 ist (vgl. z.B. EP-A 180 471).

Tetrabrombisphenol-A-oligocarbonat ist beschrieben durch die Formel (II), wobei die Oligomere entweder mit Phenol oder mit Tribromphenol terminiert werden:

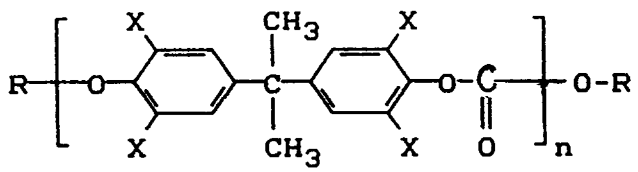

(II)

R =

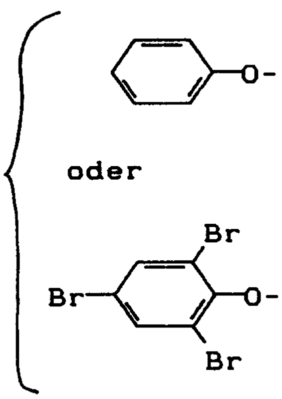

oder

worin X Wasserstoff oder Brom darstellt, n ist eine Durchschnittszahl zwischen 4 und 7.

Tetrabrombisphenol-A-oligocarbonat ist bekannt und nach bekannten Verfahren herstellbar.

Komponente E

Antimontrioxid bzw. Antimonpentoxid sind allgemein bekannte Verbindungen.

Die Formmassen können Nukleierungsmittel wie Mikrotalk enthalten. Weiterhin können die Formmassen übliche Zusatzstoffe wie Gleit- und Entformungsmittel, Verarbeitungsstabilisatoren, Füll- und Verstärkungsstoffe sowie Farbstoffe und Pigmente enthalten.

Die Nukleierungsmittel und üblichen Zusatzstoffe außer Füll- und Verstärkungsstoffe können in Mengen von ca. 0,1 bis 3 Gew.-Teilen, bezogen auf 100 Gew.-Teile thermoplastische Formmassen A + B + C + D zugegeben werden.

Füll- und Verstärkungsmittel können in Mengen von 1 bis 10 Gew.-Teilen, bezogen auf 100 Gew.-Teile A + B + C + D zugegeben werden.

Die Herstellung der erfindungsgemäßen Formmassen kann in den üblichen Mischaggregaten wie Walzen, Knetern, Ein- oder Mehrwellenextrudern durch Vermischen der Einzelkomponenten erhalten werden.

Beispiele

Die im Beispiel angegebenen Komponenten werden gemischt und in einer Spritzgußmaschine bei üblichen PBT-Verarbeitungsbedingungen (Massetemperatur ca. 260 °C) zu Prüfkörpern verarbeitet.

Beispiel

46,5 Gew.-% Polybutylenterephthalat (PBT), Schmelzviskosität 850 ± 50 Pa*s (Göttfert) (relative Lösungsviskosität 1,834 bis 1,875, gemessen bei 25 °C in einer 0,5 %igen Lösung aus Phenol und o-Dichlorbenzol, Mischungsverhältnis 1:1 Gewichtsteile)
20,0 Gew.-% thermoplastisches Polyurethan (Desmopan® 385, Bayer AG): Reaktionsprodukt eines Adipinsäure-Butandiol-Polyesters mit 4,4'-Diphenylmethandiisocyanat, Butandiol-1,4 als Kettenverlängerer, Verseifungszahl > 250
10,0 Gew.-% epoxidiertes Tetrabrombisphenol-A: Maktheshim® F2400, Eurobrom BVNL
3,5 Gew.-% Antimontrioxid
20,0 Gew.-% Acrylatkautschuk (Butylacrylat/Methylmethacrylat): Paraloid® EXL 3300, Rohm & Haas

| Eigenschaften | Dim. | Vorschrift | Beispiel |
|---|---|---|---|
| MVI, 260°C/5 kg | °C | DIN 53735 | 90 |
| Zugversuch: | | | |
| Streckspannung | $N/mm^2$ | DIN 53455 | 22 |
| Streckdehnung | % | DIN 53455 | 11 |
| Reißdehnung | % | DIN 53455 | 67 |
| E-Modul | $N/mm^2$ | DIN 53457-t | 800 |
| Biegeversuch: | | | |
| Biegespannung bei | | | |
| Höchstkraft | $N/mm^2$ | DIN 53452 | 25 |
| Randfaserdehnung | % | DIN 53452 | 6,7 |
| 3,5 % Biegesp. | $N/mm^2$ | DIN 53452 | 20 |
| E-Modul | $N/mm^2$ | DIN 53457-B3 | 680 |
| Izod-Kerbschlagz. | $kJ/m^2$ | ISO180/1A | 13 |
| Wärmeformbest. | | | |
| Vicat. VST B/120 | °C | DIN 53460 | 61 |
| Brandverhalten | | | |
| UL 94, 0,8 mm | Klasse | IEC707 | V2** |
| UL 94, 1,6 mm | Klasse | IEC707 | V2 |

* MVI = Melvolume Index

** Verglichen mit einem thermoplastischen Polyurethan (nicht flammschützend einstellbar) zeigt die erfindungsgemäße Formmasse ein gutes Brandverhalten.

## Patentansprüche

**1.** Thermoplastische Formmassen enthaltend
A) 12,5 bis 84,5 Gew.-Teilen Polyalkylenterephthalat,
B) 5 bis 30 Gew.-Teilen thermoplastischem Polyurethan,
C) 5 bis 30 Gew.-Teilen Acrylatkautschuk,
D) 5 bis 20 Gew.-Teile halogenhaltiger organischer Verbindung und

E) 0,5 bis 7,5, vorzugsweise 2 bis 6 Gew.-Teile Antimontrioxid oder Antimonpentoxid,
wobei die Summe aus A + B + C + D + E 100 ergibt.

**2.** Thermoplastische Formmasse gemäß Anspruch 1 enthaltend
A) 25 bis 76 Gew.-Teilen Polyalkylenterephthalat,
B) 7 bis 25 Gew.-Teilen thermoplastischem Polyurethan,
C) 7,5 bis 25 Gew.-Teilen Acrylatkautschuk,
D) 7,5 bis 15 Gew.-Teile halogenhaltige organischen Verbindung und
E) 2 bis 6 Gew.-Teile Antimontrioxid oder Antimonpentoxid.

**3.** Formmassen gemäß Anspruch 1, worin die thermoplastischen Polyurethane Reaktionsprodukte aus Diisocyanaten mit aliphatischen Oligo- und/oder Polyestern und/oder -ethern sind.

**4.** Formmasse gemäß Anspruch 1, worin als Komponente D Ethylen-1,2-bistetrabromphthalimid, epoxidiertes Tetrabrombisphenol A-Harz, Tetrabrombisphenol A-oligocarbonat oder Pentabrompolyacrylat oder Mischungen daraus eingesetzt werden.

**5.** Formmasse gemäß Anspruch 1, worin Komponente D) epoxidiertes Tetrabrombisphenol A-I der Formel (I)

Formel (I)

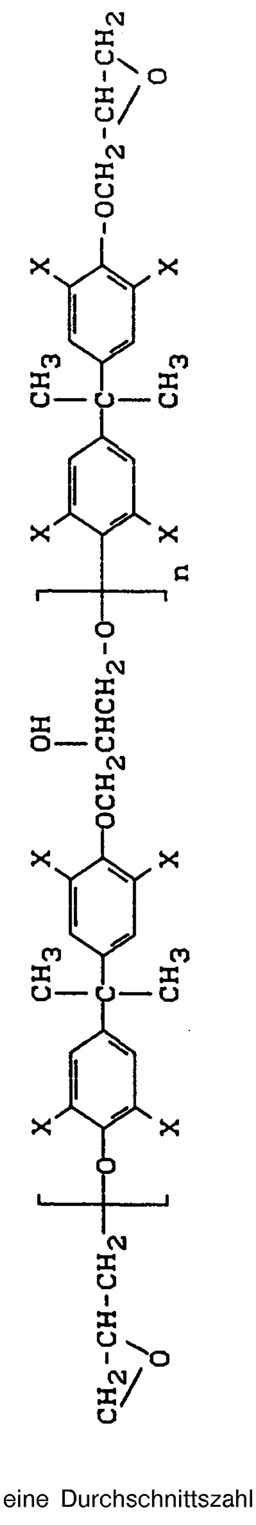

worin X Wasserstoff oder Brom darstellt und n eine Durchschnittszahl zwischen Null und weniger als 2,3 ist, oder

worin Komponente D Tetrabrombisphenol-A-oligocarbonat der Formel (II)

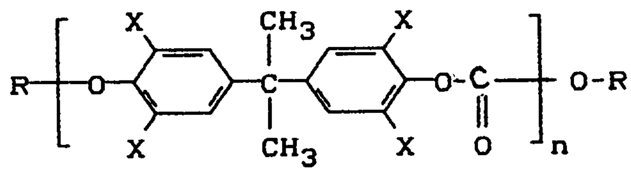 (II)

R = 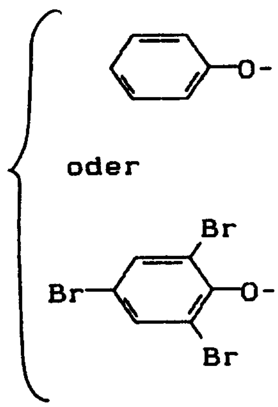

oder

ist.

6. Verfahren zur Herstellung von Formmassen gemäß Anspruch 1, wobei man die einzelnen Komponenten in Mischaggregaten vermischt.

7. Verwendung von Formmassen gemäß Anspruch 1 zur Herstellung von Formkörpern.

8. Formkörper, hergestellt aus Formmassen gemäß Anspruch 1.